# EUROPEAN PATENT APPLICATION

(11) **EP 2 107 474 A1**
(43) Date of publication of application: **07.10.2009**
(21) Application number: 08251230.2
(22) Date of filing: 31.03.2008
(51) Int. Cl.: G06F 17/30

(54) **Data access**

(71) Applicant: British Telecommunications Public Limited Company, London Greater London EC1A 7AJ (GB)
(72) Inventor: The designation of the inventor has not yet been filed
(74) Representative: Williamson, Simeon Paul

(57) **Abstract**

A method of accessing and manipulating Resource Description Framework (RDF) data stores using a spreadsheet application user interface. Data store queries can be performed on the data store by submitting queries inside cells and written in SPARQL. The record sets resulting from SPARQL queries are stored with the cells which contained the original query so that cells can be multi-valued. Cell referencing allows the data in multi-value cells to be accessed.

## Description

### Technical Field

The present invention relates to data manipulation and in particular to manipulating data stored in triple format on a database via a spreadsheet interface.

### Background

It is known to manage user and application data in order to aid organisation and subsequent retrieval. One such known method is the relational database. In such a database, application data is held in a fixed collection of related tables (relations), each table having a fixed set of columns (fields). This arrangement corresponds to a world view in which the objects in the application domain can be classified into a number of different types, each with a fixed set of properties.

However, the relational database model suffers from inflexibility. In certain situations it is restrictive to have a fixed set of properties; and in many situations it would be useful to be able to treat class and property metadata as part of the data.

Another known method of managing data is the spreadsheet. In a spreadsheet application, data is stored in a flat structure so that all of the information is available at once. The user can specify relationships by arranging the data into rows and columns under user defined headings. However, this arrangement only has significance to the user and cannot be interpreted by a computer to filter and process that data.

In recent time, the Resource Description Framework (RDF) has emerged as a language for representing information about resources on the World Wide Web. It is particularly intended for representing metadata about Web resources, such as the title, author, and modification date of a Web page, copyright and licensing information about a Web document, or the availability schedule for some shared resource. However, by generalising the concept of a "Web resource", RDF can also be used to represent information about things that can be identified on the Web, even when they cannot be directly retrieved on the Web. Examples include information about items available from on-line shopping facilities, or the description of a Web user's preferences for information delivery. Information regarding RDF can be found in the publication "Practical RDF" by Shelley Powers and published by O'Reilly Media, Inc, the contents of which are incorporated by reference.

RDF is intended for situations in which information needs to be processed by applications, rather than being only displayed to people. RDF provides a common framework for expressing this information so that it can exchanged between applications without loss of meaning.

The core feature of RDF is that each element of information is stored in the form of a data triple having the form:
subject -> predicate -> object.

In RDF, the "subject" field defines what object the triple is describing, the "predicate" field defines the piece of data in the object which is being given a value, and the "object" field defines the actual value.

However, whilst the data format for RDF has been established, manipulating RDF data in a user friendly manner is not intuitive.

The SPARQL query language has been developed for accessing and performing queries on RDF data. However, SPARQL only provides a language specification and not a particular tool or system for working with the RDF data in a manner which is user friendly.

The present invention is concerned with accessing the data stored in a RDF format in response to a user query and returning the results to the user in a familiar spreadsheet format.

Furthermore, the system can return the results such that each spreadsheet cell contains a single query result, or more significantly, allow a single cell to contain the entire set of results.

The advantage of storing a set of results in a single cell is that further queries can be performed referencing only the single cell to return a smaller subset of query results.

Alternatively, the user can access specific results within the set of results contained in a query result cell.

The above concepts are generally covered by the concept of nesting RDF queries.

### Statements of Invention

In one embodiment, the present invention provides a method of accessing a data store containing data represented as data triples, in response to a query submitted via a grid based user interface having a plurality of cells, the method comprising the steps of: receiving from a first cell, a query for information stored in said data store, submitting said query to said data store, returning the results of said query to said first cell.

Preferably the query contains at least one reference to at least one other cell in the grid based interface, the method further comprising, prior to submitting said query to the data store: determining the value of the at least one referenced cell, for each reference in the query; and replacing each references in the received query with the respective determined value.

In an embodiment, the present invention provides an apparatus for accessing a data store containing data represented as data triples, in response to a query submitted via a grid based user interface having a plurality of cells, the apparatus comprising: a receiver for receiving from a first cell, a query for information stored in said data store; means for sending said query to said data store; and means for forwarding the results of said query to said first cell,

In an embodiment, the present invention provides a computer readable storage medium contains processor implementable instructions for causing a general purpose processor to carry out the method of claims 1 to 7.

Other features are set out in the dependent claims.

An embodiment of the present invention will now be described, with reference to the following Figures in which:
Figure 1 shows a system for accessing RDF data via a spreadsheet according to the first embodiment;
Figure 2a shows the components of the server 3 illustrated in Figure 1;
Figure 2b shows the components of the client machine 5 illustrated in Figure 1;
Figure 3 schematically shows a number of subject and predicate relationships modelled as a graph;
Figure 4 schematically shows the graph illustrated in Figure 3 broken down into groups of data;
Figure 5 shows how the tuples are stored in RDF store;
Figure 6 schematically shows the functional components of the system according to the embodiment;
Figure 7 schematically shows the structure of a constant cell;
Figure 8 schematically shows the structure of a basic reference cell;
Figure 9 schematically shows a query cell and the link to the RDF data store;
Figure 10 schematically shows the structure of a triple cell;
Figure 11 schematically shows a reference cell which references a multi-valued cell; and
Figure 12 schematically shows a reference cell which references a multi-valued cell having two sets of variables.

### Specific description

### System architecture

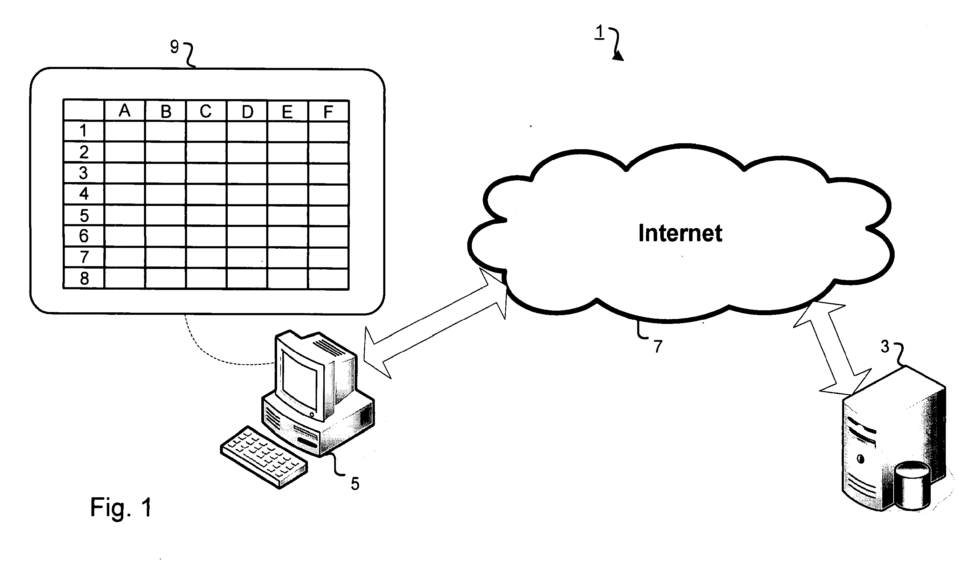

A system 1 according to the first embodiment is shown in Figure 1. The system 1 is formed from a server 3 containing an RDF data store (not shown) and a client machine 5 having an RDF interface (not shown) connected via a network 7, in this case, the Internet. A user of the client machine interacts with the RDF interface to access the RDF data store by means of a spreadsheet interface 9.

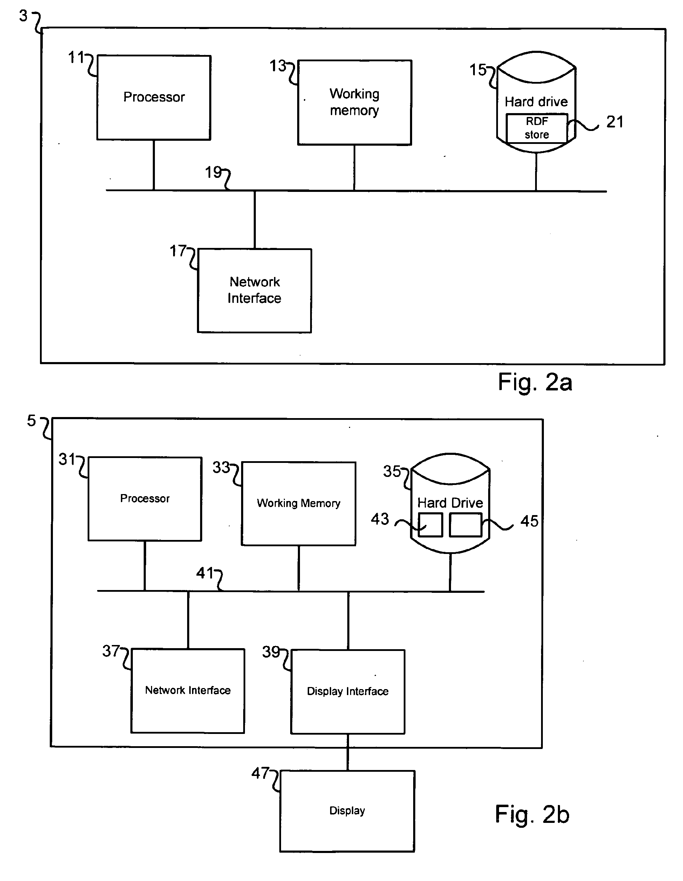

Figure 2a shows the components of the server 3 illustrated in Figure 1. The server 3 contains a processor 11, working memory 13, a hard drive 15 for persistent data storage and a network interface 17 connected via an internal system bus 19. The RDF store 21 is located on the hard drive 15 and when running, is located in the hard drive 15 and working memory 13. The RDF store 21 is operable to receive requests for RDF triples in the SPARQL format and to provide such triples to the requester.

Other components not relevant to the explanation of the server's operation have been omitted.

Figure 2b shows the components of the client machine 5 illustrated in Figure 1. The client machine 5 contains a processor 31, working memory 33, a hard drive 35 for persistent data storage, a network interface 37, and a display interface 39 connected via an internal system bus 41. The RDF interface 43 is located on the hard drive. The client also contains a spreadsheet interface 45 for displaying data to the user via a screen 47 which is connected to the display interface 39. Other components not relevant to the explanation of the client machine's operation have been omitted. In this embodiment, the RDF interface 43 and the spreadsheet interface 45 are implemented as a single program written in the JAVA programming language.

### RDF data format

The structure of the RDF data store 21 will now be explained.

As mentioned above, RDF allows for flexible storage of data. It is particularly suited where many subjects have many predicates, some, but not all being shared with other subjects. In such a case, relational databases are not efficient due to the overhead required to establish tables for each subject to predicate relationship.

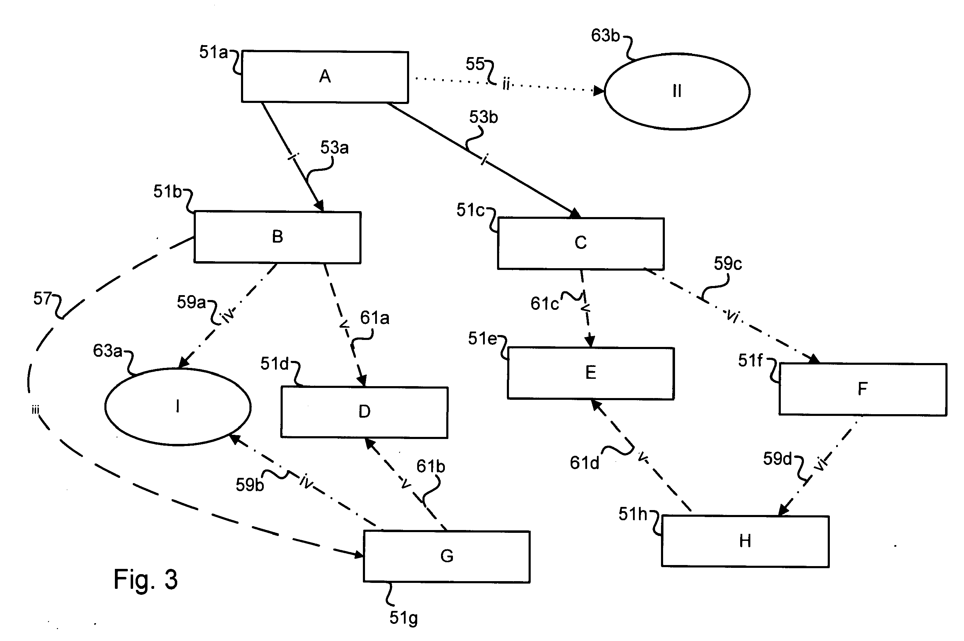

Figure 3 schematically shows a number of subject and predicate relationships modelled as a graph. In this Figure, blocks 51 A to H represent subjects whilst arrows 53 i to v represent different types of predicates for the subjects. The subject pointed to by the directional arrow represents the object of the predicate. Ovals 55 I and II represent constant values of the predicates of the subject. However, the object may also be another subject in the graph.

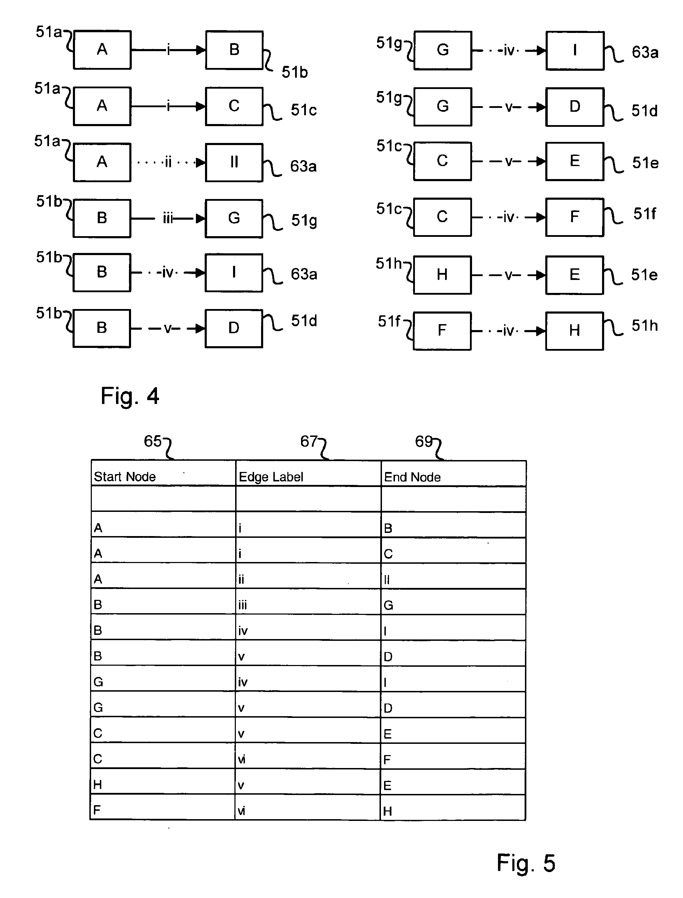

Figure 4 schematically shows the graph illustrated in Figure 3 broken down into groups of data. Each group comprises three parts: a subject 51, a predicate i-iv, and an object 51, 63, and will be referred to hereinafter as a tuple.

Figure 5 shows how the tuples are stored in RDF store 21. Each tuple comprises an entry in the respective subject field 65, predicate field 67 and object field 69 as required in RDF.

### RDF Interface

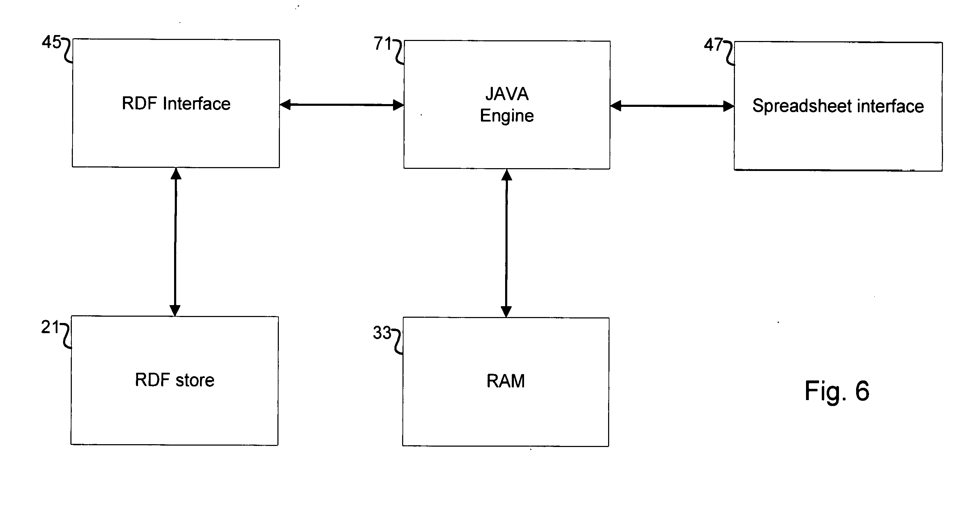

Figure 6 schematically shows the functional components of the system according to the embodiment. RDF store 21 located on the server 3 is accessed by RDF interface 43 in a conventional manner. In particular, the RDF interface 43 submits queries to the RDF store 21 using the SPARQL query language. Query results are retrieved from the RDF store and passed to a Java engine 71 which temporarily stores the complete set of query results. The spreadsheet interface is also connected to the JAVA engine 71 and, as will be explained below, can access the query results for display to the user.

### Cells

The spreadsheet interface 47 supports four different types of cells so that a user can utilise the flexibility provided by the RDF data store 21 and RDF interface 43. The functionality of the spreadsheet is improved by providing:
constant cells;
reference cells;
RDF triple cells; and
query cells containing a SPARQL query.

The cells are described below in more detail.

### Constant

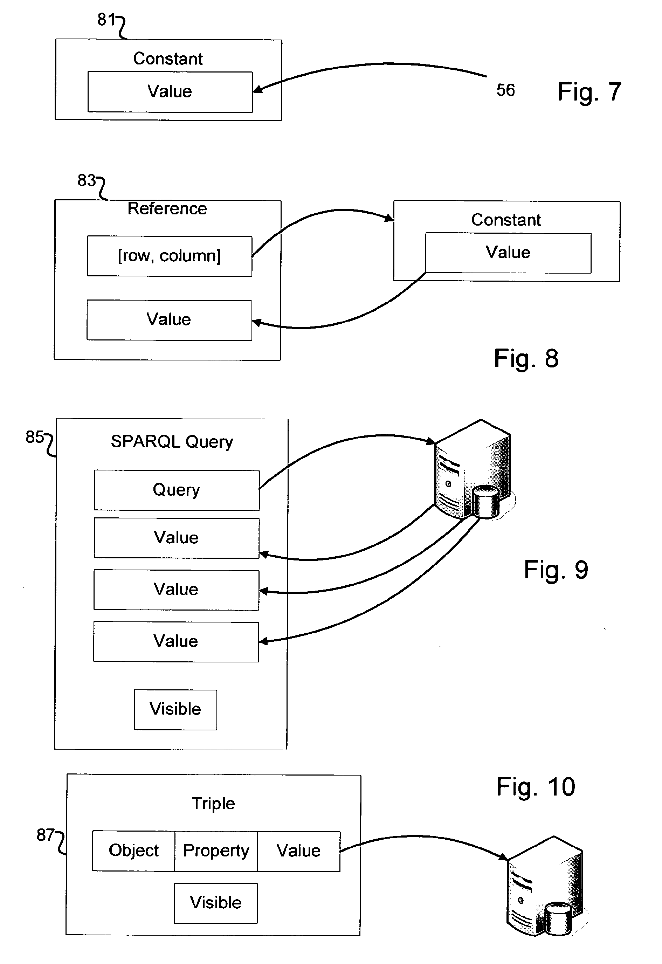

Figure 7 schematically shows the structure of a constant cell 81. A constant cell is functionally identical to a standard spreadsheet constant cell and contains text. The text could be free text, or a RDF Uniform Resource Identifier (URI).

For example
World Corp Ltd
56
http://www.foo.ba/things#thing1
rdf:type

The value displayed in a constant cell is the text which has been entered into that cell.

### Reference

Figure 8 schematically shows the structure of a basic reference cell 83. As with in a conventional spreadsheet, the basic reference cell is a reference to another cell in the spreadsheet. In Figure 8a, the reference of the reference cell specifies a row and a column in the spreadsheet, the location of a constant cell. The basic reference cell takes the value of the constant cell being referenced. It is possible for a reference cell to refer to a cell which is also a reference cell referring to a constant cell.

Other reference cells will be described after the other type types of cell have been described.

### Query

Figure 9 schematically shows a query cell and the link to the RDF data store. A query cell 85 contains a user's RDF query string, written in the SPARQL query language. Depending on the type of query, there may be more than one search result, and if so, the query cell contains a list of results, i.e., the query cell is multi-valued.

It is also possible for a query cell to request more than one variable to be returned in the result set. For example, the query may require all subject and object values from the RDF triples in the RDF data store 21 having a particular predicate value. In this case, the result set will contain two separate lists of results corresponding to the desired variables.

Although query cells are often multi-valued, since the spreadsheet interface can only display a single value to the user, the result displayed to the user is the first value of the first variable list.

### Triple

Figure 10 schematically shows the structure of a triple cell 87. A triple cell is a single RDF triple and is a cell which allows the user to enter information into the RDF data store. It has a subject, predicate and object components, and a current component flag indicating which of the three components is visible in the spreadsheet. Additionally, each component may be a constant value, a value of a query cell or the value of a reference as described above.

When a user enters a triple cell, the cell is processed by the RDF interface to convert the cell information into an RDF triple which is in a form suitable for entry into the RDF data store.

### References

As described above, cells may contain more than one value although the spreadsheet interface can only display one of those values at a time. To access those extra values, the reference cells have fields which the user can include for referencing them.

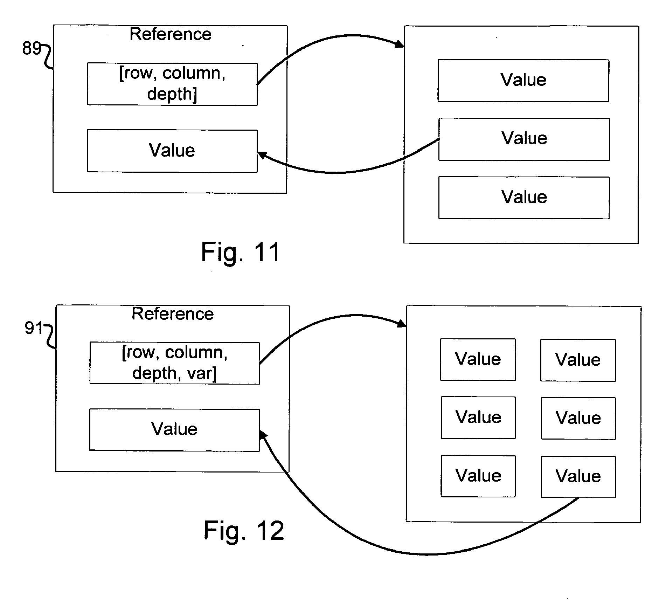

Figure 11 schematically shows a reference cell 89 which references a multi-valued cell. In order to select a desired value, the reference cell specifies a row and column as before and includes a depth field. In this way, values other than the first value in the list can be retrieved.

Figure 12 schematically shows a reference cell 91 which references a multi-valued cell having two sets of variables. In order to select a desired value, the reference cell specifies a row, column, depth and a variable label field. In this way, values other than the first value in the first variable list set can be retrieved.

The different types of cells each perform a different function. However, fundamentally, each cell has a source field, consisting of a string of characters, and a contents field, consisting of a list of records

The source string has a defined syntax, and may be composed of different syntactic elements. For example:
source = term |query |entry
query = triple*
triple = {element, element, element}
element = reference | variable | URI
term = constant | reference
entry = {URI, URI, URI}

The syntax definition above states that the source of a cell may be:
a basic term (a constant, or a reference to another cell),
a query, or
a data entry cell.

A query consists of one or more triples.

A triple has three elements. Each element can be a URI (i.e. an RDF item), a variable, or a reference.
A data entry cell is a triple as it appears in the RDF repository, i.e. as three URIs.

The contents field of a cell in general consists of a list of "records". Each record has a number of fields.

In the case of a Constant cell, the contents field is a single record, with a single field (the value of the constant). In the case of a Reference cell, the contents field is whatever the contents of the target is. In the case of a data entry cell, the contents is a single record, with three fields (subject, predicate, object)

The spreadsheet interface 47 provides memory management for the cells. In particular, the spreadsheet interface 47 provides each cell with an area of memory where the cells contents, i.e. records, can be stored and associated with that cell.

The spreadsheet interface 47, in conjunction with the JAVA engine 71 is also responsible for parsing query cells before the queries are passed to the RDF interface. In particular, the spreadsheet interface is responsible for resolving the unknown values of any variables or references in the cells of the spreadsheet.

For example, when a cell contains a reference to a constant cell, the spreadsheet interface determines the location of the referenced cell using the [row, column] information in the reference cell and then associates the contents/value of the referenced cell with the contents of the referring cell.

If a reference cell refers to a cell which is itself a reference cell, the spreadsheet interface 47 continues following the reference links until it determines a constant value.

If a reference cell refers to a query cell which is multi-valued, then the spreadsheet interface determines the reference cell and extracts the row, column and depth data from the reference to determine the location and value of the target cell.

Similarly, if a query cell contains multiple values for more than one variable, then the spreadsheet interface will extract the row, column, variable and depth data from the reference cell to determine the location, variable and value of the target cell being referenced.

In this embodiment, the RDF interface and spreadsheet interface allow the user to manipulate RDF data in a familiar manner, namely as if the data were manipulated using a standard spreadsheet. This has the advantage of being intuitive for the user while also providing powerful search functionality.

### Alternatives & Modifications

In the embodiment, the RDF interface is implemented as a standalone Java program. In an alternative, the RDF interface is implemented as a plug-in to an existing spreadsheet program such as Microsoft Excel TM or Lotus, 1-2-3 TM.

In the embodiment, the RDF interface uses the SPARQL protocol to access the RDF data. Of course, any other protocol for accessing the RDF data could be used without modifying the effect of the RDF interface. In an alternative, the RDF interface accesses the RDF data using the XSLT protocol.

In the embodiment, the RDF data store is at a server location and is accessible via a network connection such as the Internet. In an alternative, the RDF data store and the RDF Interface are located on the same local network and communicate via the internal LAN. In a yet further embodiment, the RDF interface and RDF data store are located on the same apparatus and communicate via the system bus.

In the embodiment, the spreadsheet interface supported four different types of cells. In a modification, a fifth type of cell is supported. The schema cell represents a collection of objects for a given class, similar to a database relation. It has a RDF class and a RDF number of properties. A schema cell represents a special type of query, in which every tuple value corresponds to a triple in the RDF data store. This means that schemas are update-able.

In the embodiment, the spreadsheet interface allocates memory to each cell in order to store content. In an alternative, the spreadsheet interface manages a central memory area for storing content and each cell is associated with a pointer to the content storage area.

## Claims

1. A method of accessing a data store containing data represented as data triples, in response to a query submitted via a grid based user interface having a plurality of cells, the method comprising the steps of:
receiving from a first cell, a query for information stored in said data store;
submitting said query to said data store; and
returning the results of said query to said first cell.

2. A method according to claim 1, wherein the query contains at least one reference to at least one other cell in the grid based interface, the method further comprising, prior to submitting said query to the data store:
determining the value of the at least one referenced cell, for each reference in the query; and
replacing each references in the received query with the respective determined value.

3. A method according to claim 2, wherein when the at least one reference is to a second reference cell, the determining step comprises:
extracting row and column data from the reference cell to determine the location and value of the cell being referenced by the second reference cell.

4. A method according to any preceding claim, wherein when the referenced cell is multi-valued, the determining step comprises:
extracting row, column and depth data from the reference cell to determine the location and value of the cell being referenced in the query.

5. A method according to any preceding claim, wherein when the referenced cell contains at least two variables, the determining step comprises:
extracting row, column, variable and depth data from the reference cell to determine the location, variable and value of the cell being referenced in the query.

6. A method according to any preceding claim, wherein the query is a SPARQL query, and the data store is a Resource Description Framework data store.

7. A method according to any preceding claim, wherein each cell is associated with a respective first storage area for receiving user data and a second storage area for storing the result of processing said user data

8. Apparatus for accessing a data store containing data represented as data triples, in response to a query submitted via a grid based user interface having a plurality of cells, the apparatus comprising:
a receiver for receiving from a first cell, a query for information stored in said data store;
means for sending said query to said data store; and
means for forwarding the results of said query to said first cell.

9. Apparatus according to claim 8, wherein the query contains at least one reference to at least one other cell in the grid based interface, the apparatus further comprising:
means for determining the value of the at least one referenced cell, for each reference in the query; and
means for replacing each references in the received query with the respective determined value.
